(19) Europäisches Patentamt
European Patent Office
Office européen des brevets

(11) **EP 4 549 949 A1**

(12) **EUROPEAN PATENT APPLICATION**
published in accordance with Art. 153(4) EPC

(43) Date of publication:
07.05.2025 Bulletin 2025/19

(21) Application number: 23831297.9

(22) Date of filing: 23.06.2023

(51) International Patent Classification (IPC):
*G01N 35/00* (2006.01)    *C12M 1/00* (2006.01)
*C12Q 1/68* (2018.01)    *G01N 21/03* (2006.01)
*G01N 21/64* (2006.01)    *G01N 35/04* (2006.01)
*G01N 37/00* (2006.01)

(52) Cooperative Patent Classification (CPC):
**G01N 21/6456; C12M 1/00; G01N 21/0332;**
**G01N 35/00; G01N 35/04; G01N 37/00;**
G01N 21/6458; G01N 2021/6482; G01N 2021/7786

(86) International application number:
**PCT/JP2023/023317**

(87) International publication number:
**WO 2024/004855 (04.01.2024 Gazette 2024/01)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: 01.07.2022 JP 2022106963

(71) Applicant: Toppan Holdings Inc.
Tokyo 110-0016 (JP)

(72) Inventors:
• **SUZUKI Yuta**
**Tokyo 110-0016 (JP)**
• **MAKINO Yoichi**
**Tokyo 110-0016 (JP)**

(74) Representative: **Plasseraud IP**
**104 Rue de Richelieu**
**CS92104**
**75080 Paris Cedex 02 (FR)**

(54) **DETECTION APPARATUS**

(57) A detection device includes a temperature adjustment unit that adjusts a temperature of a fluidic device, an imaging unit that irradiates the fluidic device with excitation light and captures an image of fluorescence emitted from the fluidic device, and a conveying unit that conveys the fluidic device to the temperature adjustment unit and the imaging unit. The fluidic device houses a mixed aqueous solution of a liquid sample that contains a target substance and a detection reagent that reacts with the target substance to generate a product that emits the fluorescence, and the temperature adjustment unit includes a heating unit that heats the fluidic device and a cooling unit that cools the fluidic device heated.

FIG.1

## Description

[Technical Field]

The present invention relates to a detection device.

The present application claims the benefit of priority from Japanese Patent Application No. 2022-106963 filed in Japan on July 1, 2022, the contents of which are incorporated herein by reference.

[Background Art]

Techniques for detecting biomolecules in a fluidic device are known. For example, in a DNA microarray technique, in some cases, biomolecules are introduced into micropores, and a reaction involving heating is performed to detect biomolecules. Known techniques for single-molecule detection of biomolecules that can be used in that case include a digital measurement technique such as digital invasive cleavage assay (ICA).

The inventors have previously developed a digital measurement technique using a reaction container (also referred to as a fluidic device) having a plurality of wells (see Patent Literature 1). In the method described in Patent Literature 1, an aqueous medium containing a target substance is supplied to a channel of a fluidic device and enclosed in a plurality of wells provided on a wall surface of the channel. Furthermore, the fluidic device is heated to heat a reaction solution to cause a detection reaction. Thus, a specific fluorescence emission is caused which allows detection of the target substance.

[Citation List]

[Patent Literatures]

[PTL 1] WO 2015/115635 A

[Summary of the Invention]

[Technical Problem]

This technical field requires detection devices capable of performing a large number of detections in a short time. On the other hand, digital ICA requires heating in a detection reaction, and also requires prevention of a side reaction caused by excessive heating to achieve higher detection accuracy.

The present invention has been made in view of such a circumstance, and an object of the present invention is to provide a detection device enabling a large number of detections to be performed based on the principle of digital ICA in a short time while ensuring high detection accuracy.

[Solution to Problem]

In order to solve the above problem, aspects of the present invention include the following aspects.

[1] A detection device including: a temperature adjustment unit that adjusts a temperature of a fluidic device; an imaging unit that irradiates the fluidic device with excitation light and captures an image of fluorescence emitted from the fluidic device; and a conveying unit that conveys the fluidic device to the temperature adjustment unit and the imaging unit, wherein the fluidic device houses a mixed aqueous solution of a liquid sample that contains a target substance and a detection reagent that reacts with the target substance to generate a product that emits the fluorescence, and the temperature adjustment unit includes a heating unit that heats the fluidic device and a cooling unit that cools the fluidic device heated.

[2] The detection device according to [1], including a control unit that controls operation of the temperature adjustment unit, wherein the control unit controls the temperature of the heating unit to be 50°C or higher and 99°C or lower.

[3] The detection device according to [2], wherein prior to heating of the fluidic device, the control unit performs preheating in which the heating unit is heated to a temperature higher than room temperature and lower than or equal to a reaction temperature set in advance.

[4] The detection device according to any one of [1] to [3], including a control unit that controls operation of the temperature adjustment unit, wherein the control unit controls the temperature of the cooling unit to be 0.1°C or higher and lower than 30°C.

[5] The detection device according to [4], wherein prior to cooling of the fluidic device, the control unit performs precooling in which the cooling unit is cooled to a temperature higher than or equal to a cooling temperature set in advance and lower than room temperature.

[6] The detection device according to any one of [1] to [5], wherein the imaging unit includes a light source unit that emits the excitation light, a dichroic mirror that reflects the excitation light and transmits the fluorescence, a projection lens that projects the excitation light reflected from the dichroic mirror onto the fluidic device, an image forming lens that forms an image of the fluorescence transmitted through the dichroic mirror, and an imaging means that captures the image formed by the image forming lens, and the projection lens also serves as an objective lens that collects the fluorescence generated by the fluidic device and guides the fluorescence to the image forming lens.

[7] The detection device according to [6], wherein the light source unit includes a light source that emits light including the excitation light, and an optical filter that transmits part of the light having a wavelength that is used as the excitation light.

[8] The detection device according to [7], wherein the light source unit includes a first optical filter that transmits part of the light having a first wavelength that is used as the excitation light, a second optical filter that transmits part of the light having a second wavelength that is used as the excitation light, and a switching unit that performs switching between the first optical filter and the second optical filter.

[9] The detection device according to [6], wherein the light source unit includes an external light introduction unit that introduces external light and guides the external light to the fluidic device.

[10] The detection device according to any one of [6] to [9], wherein the projection lens and the objective lens form a confocal optical system.

[11] The detection device according to [10], wherein the imaging unit includes a spatial filter that has a pinhole and is provided between the image forming lens and the imaging means, a confocal position of the confocal optical system is located between the image forming lens and the imaging means, and the pinhole spatially overlaps with the confocal position.

[12] The detection device according to any one of [6] to [11], including a control unit, wherein the fluidic device has a microwell that houses the target substance and the detection reagent and is used as a reaction site in which the product is generated, the objective lens has an autofocus mechanism, and prior to image capturing by the imaging means, the control unit controls the autofocus mechanism to set a focus position of the objective lens to the microwell.

[13] The detection device according to any one of [1] to [12], further including a moving means, wherein the heating unit includes a temperature control holder that houses a plurality of the fluidic devices, the conveying unit includes a conveying holder that houses the plurality of fluidic devices, the temperature control holder includes a first housing portion that extends in a conveying direction of the conveying unit and houses the plurality of fluidic devices, the temperature control holder includes a second housing portion that extends in the conveying direction of the conveying unit and houses the plurality of fluidic devices, and the moving means extrudes and moves fluidic devices housed in the first housing portion toward the second housing portion while the temperature control holder and the conveying holder are close to each other.

[Advantageous Effects of the Invention]

The present invention provides a detection device enabling a large number of detections based on the principle of digital ICA in a short time while ensuring high detection accuracy.

[Brief Description of the Drawings]

Fig. 1 is a schematic perspective view of a detection device 1.
Fig. 2 is a schematic diagram showing a configuration of an imaging unit 20.
Fig. 3 is a schematic diagram of a conveying unit 30 of the detection device 1.
Fig. 4 is a schematic perspective view of a fluidic device 100.
Fig. 5 is a cross-sectional view of the fluidic device 100.
Fig. 6 is a plan view of some of a plurality of microwells 110.
Fig. 7 is an explanatory diagram of a method of detecting a sample using the fluidic device 100.
Fig. 8 is an explanatory diagram of the method of detecting a sample using the fluidic device 100.
Fig. 9 is an explanatory diagram of the method of detecting a sample using the fluidic device 100.
Fig. 10 is a schematic diagram showing an example of an ICA method.
Fig. 11 is an explanatory diagram showing operation of the detection device 1.
Fig. 12 is an explanatory diagram showing the operation of the detection device 1.
Fig. 13 is an explanatory diagram showing the operation of the detection device 1.
Fig. 14 is an explanatory diagram showing the operation of the detection device 1.
Fig. 15 is a schematic perspective view of a detection device 2.
Fig. 16 is a schematic perspective view of a moving means 70.
Fig. 17 is a schematic perspective view of a heating unit 11 and a conveying unit 35.
Fig. 18 is an explanatory diagram showing operation of the detection device 2.
Fig. 19 is an explanatory diagram showing the operation of the detection device 2.

[Description of the Embodiments]

[First embodiment]

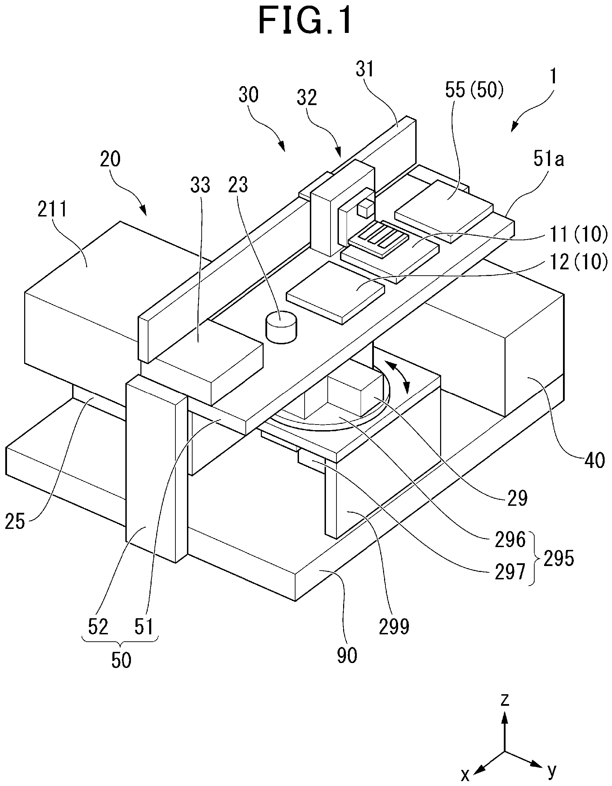

A detection device and a fluidic device according to the first embodiment of the present invention will be described below with reference to Figs. 1 to 14. In the following drawings, the dimensions and ratios of the components are appropriately made different for easy understanding of the drawings.

In the following, an xyz orthogonal coordinate system is set, and the positional relationship of members will be described with reference to the xyz orthogonal coordinate system. Here, the x-axis direction is a predefined direction in a horizontal plane, the y-axis direction is a direction perpendicular to the x-axis direction in the horizontal plane, and the z-axis direction is a direction (i.e., vertical direction) perpendicular to each of the x-axis direction and the y-axis direction.

<<Detection device>>

Fig. 1 is a schematic perspective view of a detection device 1 of the present embodiment. The detection device 1 includes a temperature adjustment unit 10, an imaging unit 20, and a conveying unit 30. Furthermore, the detection device 1 includes a control unit 40 that controls operation of the detection device 1.

The temperature adjustment unit 10, the imaging unit 20, the conveying unit 30, and the control unit 40 are provided on a base 90.

The detection device 1 is used to detect a target substance contained in a liquid sample. Specifically, the detection device 1 is used when a target substance is detected using a fluidic device 100 based on the principle of digital ICA (hereinafter referred to as dICA). In the detection device 1, a product generated in the fluidic device 100 is excited by light, and an image of generated fluorescence is captured and analyzed to detect a target substance.

The detection device 1 will be described below

[Temperature adjustment unit]

The temperature adjustment unit 10 includes a heating unit 11 that heats a fluidic device 100, and a cooling unit 12 that cools the heated fluidic device 100.

In the heating unit 11 in Fig. 1, heat is generated on the upper surface (surface on the +z side) of the heating unit 11, and an object in contact with the upper surface is directly heated. The heating unit 11 may be a heater of a known heating type, for example, a resistance heating type, an induction heating type, or the like. In Fig. 1, the heating unit 11 is a member having a rectangular shape in plan view. The heating unit 11 is preferably configured to be provided with a known temperature sensor such as a thermocouple and be able to control the temperature while measuring the temperature. The "plan view" refers to a field of view from the +z side toward the -z side along the z-axis.

Instead of the above configuration, for example, the heating unit 11 may be configured to have a cover to form an internal space for housing an object (i.e., fluidic device 100) and heat the internal space to indirectly heat the object.

The heating unit 11 is controlled to be 30°C or higher and 99°C or lower by the control unit 40.

The cooling unit 12 in Fig. 1 cools an object in contact with the upper surface of the cooling unit 12. The cooling unit 12 may be a cooling means of a known cooling type. The cooling unit 12 may be composed of, for example, a known Peltier element, and be configured such that the upper surface is cooled by current application. In Fig. 1, the cooling unit 12 is a member having a rectangular shape in plan view. The cooling unit 12 is preferably configured to be provided with a known temperature sensor such as a thermocouple and be able to control the temperature while measuring the temperature.

The cooling unit 12 is controlled to be 0.1°C or higher and lower than 30°C by the control unit 40.

Alternatively, the cooling unit 12 may be configured such that the upper surface is a heat exchanger plate made of a metal having high thermal conductivity and a known water-cooled or air-cooled heat dissipation unit is provided on the lower surface. Alternatively, the cooling unit 12 may be simply a metal plate having high thermal conductivity.

The temperature adjustment unit 10 is provided on a mounting portion 50 bridging over the base 90 (in the +z direction with respect to the base 90). The mounting portion 50 has a stage 51 that has a rectangular shape in plan view and extends in the x direction, and a pair of bridge piers 52 that are provided on both ends of the stage 51 in the longitudinal direction. In the temperature adjustment unit 10, the heating unit 11 and the cooling unit 12 are arranged in this order in the +x direction from one end 51a of the stage 51.

At a position on the stage 51 further to the -x side than the heating unit 11 is, a standby unit 55 in which a conveying stage (described later) of the conveying unit 30 stands by may be provided.

[Imaging unit]

The imaging unit 20 is provided at a position on the stage 51 further to the +x side than the cooling unit 12 is. The imaging unit 20 irradiates a fluidic device 100 with excitation light, and captures an image of fluorescence emitted from the fluidic device 100.

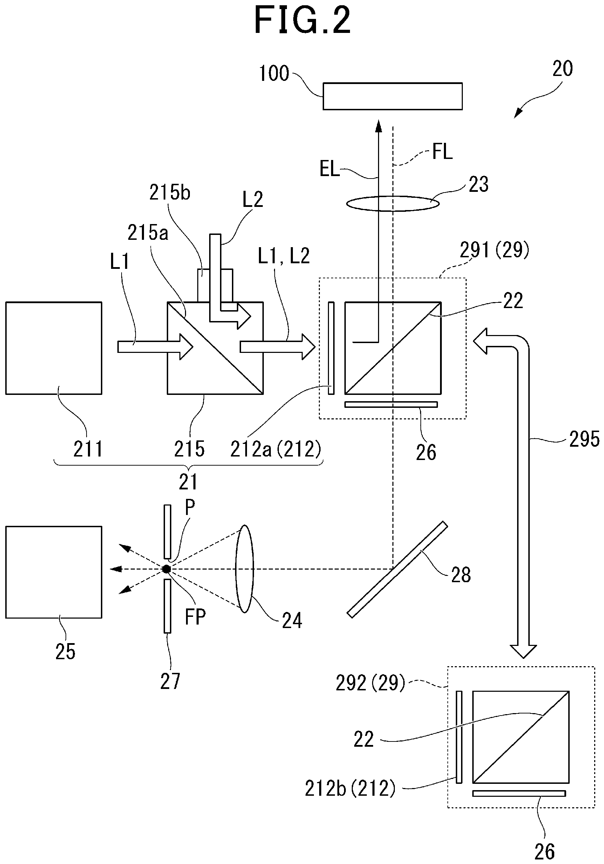

Fig. 2 is a schematic diagram showing a configuration of the imaging unit 20. The imaging unit 20 includes a light source unit 21, a dichroic mirror 22, a projection lens 23, an image forming lens 24, an imaging means 25, an absorption filter 26, a spatial filter 27, and a reflecting mirror 28.

The light source unit 21 emits excitation light EL. The light source unit 21 includes a light source 211 that emits light L1 including excitation light EL, and an optical filter 212 that transmits part of the light L1 having a wavelength that is used as excitation light EL.

The light source 211 may be, for example, a known mercury lamp. Alternatively, the light source 211 may be a known LED light source or LD light source. The following will describe a case in which the light source 211 is a mercury lamp that is a white light source and the light L1 is white light.

The optical filter 212 transmits part (i.e., excitation light EL) of the light L1 as white light that has a wavelength required to excite a product (i.e., fluorescent material) generated in the fluidic device 100, and extracts the excitation light EL. The optical filter 212 is a bandpass filter having the property of transmitting excitation light EL and blocking light other than the excitation light EL.

Thus, the light source unit 21 can extract excitation light EL from the light L1 emitted from the light source 211, and emit the excitation light EL.

The light source unit 21 may include, at a position between the light source 211 and the optical filter 212 in the optical path, an external light introduction unit 215 that introduces external light L2 different from the light L1 emitted from the light source 211 and guides the external light L2 to the fluidic device 100. The external light introduction unit 215 includes a reflecting mirror 215a that can be freely placed on and removed from the optical path, and an introduction port 215b from which external light L2 is introduced.

In the light source unit 21, when light L1 emitted from the light source 211 is used, the reflecting mirror 215a of the external light introduction unit 215 is removed from the optical path to allow the light L1 to pass through. When external light L2 is used, the reflecting mirror 215a of the external light introduction unit 215 is placed in the optical path to block the light L1 and guide the external light L2 introduced from the introduction port 215b toward the optical filter 212.

The excitation light EL emitted from the light source unit 21 is incident on the dichroic mirror 22.

The dichroic mirror 22 has the property of reflecting excitation light EL and transmitting fluorescence FL. The dichroic mirror 22 is disposed at an angle of 45° (i.e., an incident angle of 45°) with respect to the incident direction of excitation light EL, and reflects excitation light EL to the direction with an angle of 90° with respect to the incident direction of the excitation light EL.

The excitation light EL reflected from the dichroic mirror 22 is incident on the projection lens 23, and is projected onto the fluidic device 100. In the fluidic device 100, fluorescence FL is emitted from a fluorescent material excited by the excitation light EL.

The fluorescence FL is incident on the dichroic mirror 22 via the projection lens 23. The dichroic mirror 22 transmits the fluorescence FL. On the other hand, even when part of the excitation light EL is reflected from the fluidic device 100 and returned to the dichroic mirror 22, the dichroic mirror 22 reflects the excitation light EL. Thus, the excitation light EL and the fluorescence FL are separated from each other.

The fluorescence FL transmitted through the dichroic mirror 22 is incident on the absorption filter 26. The absorption filter 26 may be a dichroic mirror that transmits fluorescence FL and does not transmit light having a different wavelength from the fluorescence FL. When the absorption filter 26 is, for example, a dichroic mirror that has a higher wavelength resolution than the dichroic mirror 22 and that transmits light having a long wavelength including fluorescence FL and blocks (and reflects) light having a short wavelength including excitation light EL, it is possible to remove stray light and achieve detection with high accuracy.

The fluorescence FL transmitted through the absorption filter 26 is incident on the image forming lens 24 via the reflecting mirror 28, and forms an image.

The imaging means 25 captures the image formed by the image forming lens 24. The imaging means 25 may be a digital camera including a known imaging element.

In the imaging unit 20 described above, the projection lens 23 that projects the excitation light EL emitted from the light source unit 21 onto the fluidic device 100 also serves as an objective lens that collects fluorescence FL generated by the fluidic device 100 and guides the fluorescence FL to the image forming lens 24. The projection lens 23 (also serving as an objective lens) may have an autofocus mechanism.

Furthermore, in the imaging unit 20, the projection lens 23 and the image forming lens 24 preferably form a confocal optical system. In the imaging unit 20, the spatial filter 27 having a pinhole P is provided between the image forming lens 24 and the imaging means 25, and a confocus FP of the confocal optical system is located between the image forming lens 24 and the imaging means 25. The other confocus of the confocal optical system overlaps with the fluidic device 100. The spatial filter 27 is disposed so that the pinhole P spatially overlaps with the confocus FP. This enables the imaging unit 20 to remove stray light and achieve detection with high accuracy. In order to allow the confocal optical system to function, the confocal optical system may be composed of a known member appropriately selected.

As shown in Figs. 1 and 2, the imaging unit 20 may include filter blocks 29 in each of which the optical filter 212, the dichroic mirror 22, and the absorption filter 26 are integrated.

The light source unit 21 may be configured such that switching can be performed between a first optical filter 212a that transmits part of the light L1 having a first wavelength that is used as excitation light EL and a second optical filter 212b that transmits part of the light L1 having a second wavelength that is used as excitation light EL.

Specifically, the light source unit 21 includes filter blocks 291 and 292 and a switching unit 295. The filter block 291 includes the first optical filter 212a. The filter block 292 includes the second optical filter 212b. The switching unit 295 performs switching between the filter block 291 and the filter block 292. The switching unit 295 includes a turntable 296 and a driving unit 297. The turntable 296 is provided with the filter blocks, and the driving unit 297 drives the turntable 296 in the circumferential direction. The filter blocks 29 and the switching unit 295 are supported by a support 299 provided on the base 90.

The switching unit 295 can switch the filter block 292 provided on the turntable 296 by causing the driving unit 297 to move the turntable 296 in the circumferential direction.

[Conveying unit]

As shown in Fig. 1, the conveying unit 30 includes a rail 31 that extends in the x-axis direction, a conveying body 32 that is moved along the rail 31 in the $\pm$x-axis direction, and a driving unit 33 that drives the conveying body 32.

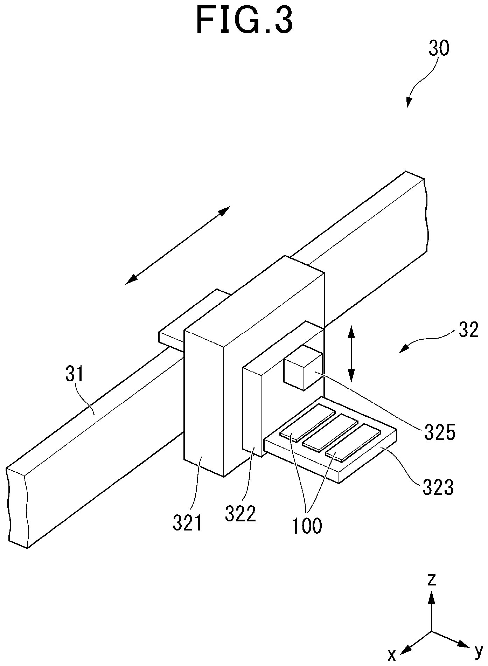

Fig. 3 is a schematic diagram of the conveying unit 30 of the detection device 1. The conveying body 32 includes a first member 321, a second member 322, a stage 323, and an illumination unit 325. The first member 321 is connected to the rail 31 and moved in the $\pm$x-axis direction. The second member 322 is connected to the first member 321 and moved in the $\pm$z-axis direction. The stage 323 is connected to the second member 322. The illumination unit 325 illuminates the stage 323.

The upper surface of the stage 323 is parallel to the xy plane, and a fluidic device 100 to be observed is placed on the stage 323. The stage 323 may have various configurations as long as a fluidic device 100 can be placed on the stage 323 and the fluidic device 100 can be observed from below (i.e., -z direction). The stage 323 may be, for example, a plate-shaped member that allows light to be transmitted, or a frame with a void in which a fluidic device 100 is observed. The stage 323 may be a holding member that holds a fluidic device 100 from the sides. In Fig. 3, three fluidic devices 100 are placed on the stage 323; however, the number of fluidic devices 100 placed on the stage 323 can be set according to the size of the stage 323.

The illumination unit 325 irradiates a fluidic device 100 placed on the stage 323 with white light to allow image capturing in a bright field.

The conveying unit 30 can move a fluidic device 100 placed on the stage 323 in the x-axis direction and the z-axis direction.

[Control unit]

The control unit 40 shown in Fig. 1 controls operation of the temperature adjustment unit 10, the imaging unit 20, and the conveying unit 30. The control unit 40 may be a dedicated device provided in the detection device 1, or may be a general-purpose computer in which software for control is installed.

[Fluidic device]

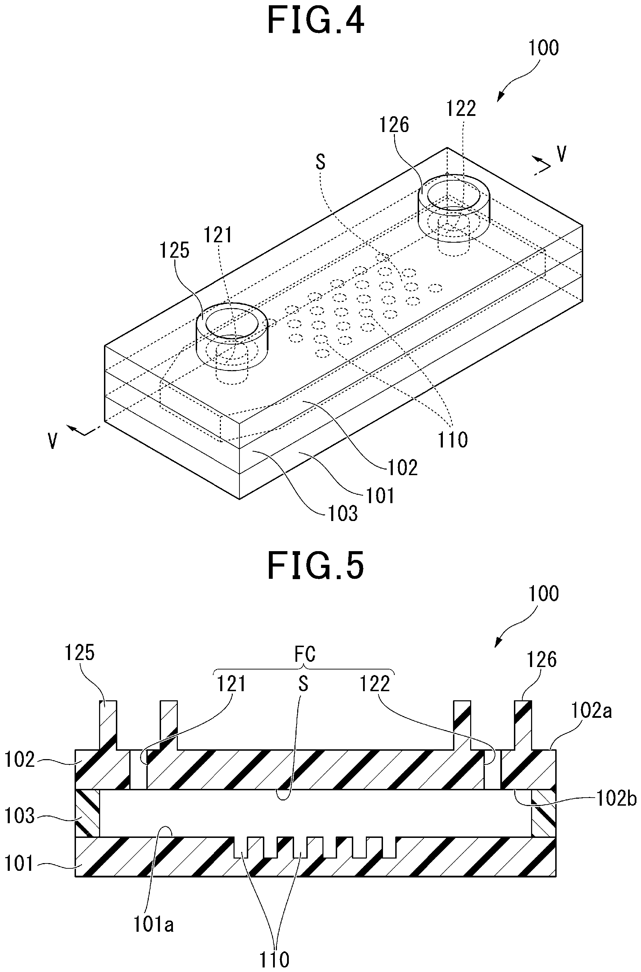

Fig. 4 is a schematic perspective view of a fluidic device 100. Fig. 5 is a cross-sectional view of the fluidic device 100 taken along line segment V-V indicated by arrows in Fig. 4. The fluidic device 100 is used to detect a target substance contained in a liquid sample.

The liquid sample is an aqueous solution containing a target substance, and contains, for example, a biological sample or an environmental sample. The biological sample is not specifically limited, and may be serum, plasma, urine, cell culture medium, or the like. For example, a PCR reaction solution that is obtained using a biological sample as a template and contains a dyeing reagent as a detection reagent may be used. Furthermore, the environmental sample may be, for example, river water, factory wastewater, or the like.

The target substance may be, for example, DNA, RNA, a protein, virus, cell, exosome, or the like. Examples of the RNA include miRNA and mRNA. Examples of the cell include a bacterium, a yeast, an animal cell, a plant cell, and an insect cell.

In the fluidic device 100, a target substance contained in the sample as described above is reacted with a detection reagent to detect the target substance.

[Fluidic device]

As shown in Figs. 4 and 5, the fluidic device 100 includes a well plate 101, a cover member 102, and a wall member 103. The fluidic device 100 is used as a reaction container that has an internal space S for housing a sample and in which a detection reaction for a target substance contained in the sample is performed.

(Well plate)

The well plate 101 is a plate-shaped member having a rectangular shape or a narrow rectangular shape in plan view. A plurality of wells (also referred to as microwells) 110 are provided in a center portion of an upper surface 101a of the well plate 101 in the longitudinal direction of the well plate 101.

The microwells 110 are recesses that are provided on the upper surface 101a of the well plate 101, and are open to the upper surface 101a. The microwells 110 each refer to a space surrounded by the recess and a virtual plane that is parallel to the upper surface 101a and is in contact with the upper surface 101a.

The microwells 110 house a sample housed in the internal space S, and function as a reaction site of a target substance contained in the sample and a detection reagent.

The material of the well plate 101 has electromagnetic wave transmission properties. An electromagnetic wave used to determine whether the material has electromagnetic wave transmission properties may be an X-ray, ultraviolet light, visible light, infrared radiation, or the like. When the well plate 101 has electromagnetic wave transmission properties, an electromagnetic wave can be used to analyze the results of an experiment conducted in the fluidic device 100 including the well plate 101. For example, fluorescence, phosphorescence, or the like generated by irradiation with an electromagnetic wave can be measured from the well plate 101 side.

Although the details will be described later, for example, when in the microwells 110, fluorescence having a peak in a wavelength range of 400 to 700 nm, which is the visible light range, is generated and used for sample detection, the well plate 101 may be made of a material having good transmission properties for at least light in the visible light range.

The material having electromagnetic wave transmission properties may be, for example, glass, resin, or the like. Examples of the resin include ABS resin, polycarbonate, cycloolefin copolymer (COC), cycloolefin polymer (COP), acrylic resin, polyvinyl chloride, polystyrene, polyethylene, polypropylene, polyvinyl acetate, polybutylene terephthalate (PET), and polyethylene naphthalate (PEN). These resins may contain various additives, and may be a polymer alloy in which a plurality of resins are mixed.

The material having electromagnetic wave transmission properties preferably has substantially no autofluorescence. The material having substantially no autofluorescence refers to a material having no autofluorescence having a wavelength used for sample detection, or a material having weak autofluorescence that does not affect sample detection. The intensity of the weak autofluorescence that does not affect sample detection may be, for example, approximately 1/2 or less the intensity of the fluorescence to be detected, and more preferably approximately 1/10 or less the intensity of the fluorescence to be detected. The well plate 101 made of such a material can achieve higher detection sensitivity in sample detection using an electromagnetic wave.

The material that has electromagnetic wave transmission properties and has no autofluorescence may be, for example, quartz glass. The material that has weak autofluorescence and does not interfere with sample detection using an electromagnetic wave may be low fluorescent glass, acrylic resin, COC, COP, or the like.

The thickness of the well plate 101 can be appropriately determined. When fluorescence is observed from the well plate 101 side using a fluorescence microscope, the thickness of the well plate 101 may be, for example, 5 mm or less, 2 mm or less, or 1.6 mm or less.

The well plate 101 may be a single layer made of only the above material, or may be a laminate made of a plurality of materials. When the well plate 101 is formed by processing a laminate, a first layer of the well plate 101 that has the microwells 110 and a second layer of the well plate 101 that supports the first layer may be made of different materials.

(Microwell)

The microwells 110 may have various shapes. Examples of the shape of the microwells 110 include cylindrical shapes such as a cylindrical shape, an elliptical cylindrical shape, and a polygonal cylindrical shape, shapes such as a conical shape and a pyramidal shape, and frustum shapes such as a conical frustum shape and a pyramidal frustum shape. When the microwells 110 have a shape such as a conical or pyramidal shape, or a frustum shape, the opening size of the microwells 110 is preferably gradually reduced in the depth direction of the wells.

The microwells 110 may have a flat bottom, or may have a curved bottom with a convex or concave surface.

When the microwells 110 have a cylindrical shape, the maximum diameter of the microwells 110 in plan view is preferably, for example, 10 nm to 100 $\mu$m, more preferably 100 nm to 50 $\mu$m, and even more preferably 1 $\mu$m to 20 $\mu$m. Furthermore, the depth of the microwells 110 is preferably, for example, 10 nm to 100 $\mu$m, more preferably 100 nm to 50 $\mu$m, and even more preferably 1 $\mu$m to 20 $\mu$m.

The volume of the microwells 110 is preferably, for example, 1 fL to 6 nL, more preferably 1 fL to 5 pL, even more preferably 1 fL to 2 pL, and particularly preferably 1 fL to 300 fL. When the volume of each of the microwells 110 is in the above range, an enzymatic reaction in a minute space such as digital PCR or Invader reaction can be suitably performed. Digital PCR can detect, for example, a gene mutation or the like.

The well plate 101 has a plurality of microwells 110 having the same shape and size. The microwells 110 having the same shape and size may have the same shape and volume to the extent required for digital measurement, and variation within the production error range is allowed.

The density of the microwells 110 is, for example, 100,000 to 10,000,000 microwells/cm$^2$, preferably 100,000 to 5,000,000 microwells/cm$^2$, and even more preferably 100,000 to 1,000,000 microwells/cm$^2$. When the density of the microwells 110 is in the above range, it is easy to perform an operation in which a sample is enclosed in a predetermined number of microwells 110. Furthermore, observation of the wells to analyze the experimental results is easily performed.

For example, when the fluidic device 100 is used to measure cell-free DNA mutation, and the ratio of mutant cell-free DNA to be detected to wild-type cell-free DNA is approximately 0.01%, for example, the use of 1,000,000 to 2,000,000 microwells 110 is preferable.

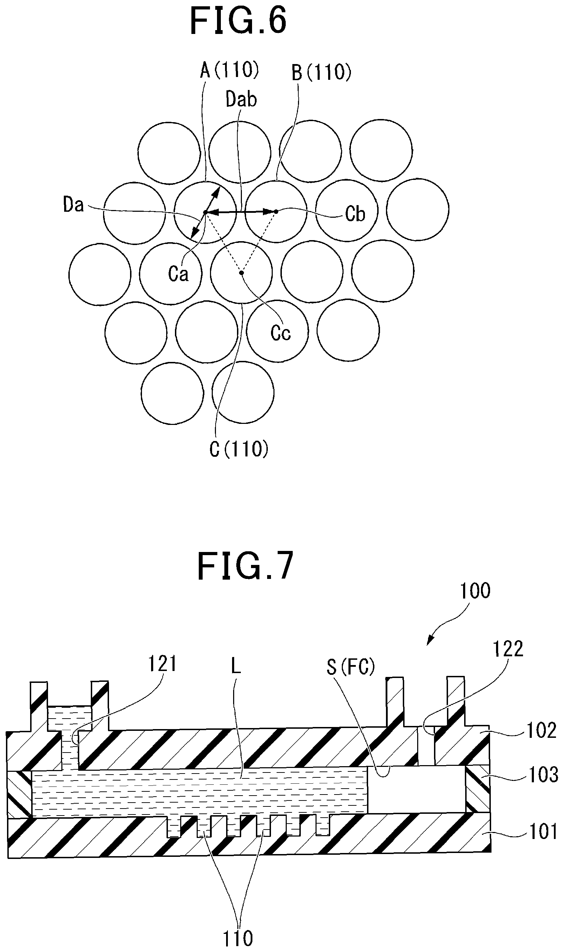

Fig. 6 is a plan view of some of the plurality of microwells 110. As shown in Fig. 6, the plurality of microwells 110 have the same shape in plan view in the well plate 101. A few (e.g., one to four) of the plurality of microwells may have a different shape to be used as alignment marks in image capturing and device production.

The plurality of microwells 110 are regularly arranged in a matrix. The state in which the microwells 110 are "regularly arranged" refers to a state in which the centroids of the openings of the plurality of microwells 110 are arranged in a certain pattern.

The centroids of the openings of the microwells 110 may be arranged, for example, in a quadrilateral lattice. In such a case, a line connecting the centroids of the openings of four adjacent microwells 110 forms a rectangle, preferably, a square.

Alternatively, the centroids of the openings of the microwells 110 may be arranged in a triangular lattice (hexagonal lattice). In such a case, a line connecting the centroids of the openings of three adjacent microwells 110 forms an equilateral triangle.

Of the plurality of microwells 110, a well (first well) A and a well (second well) B closest to the well A preferably satisfy Formula (1).

$$0.8 \leq Da/Dab < 1 \ ... \ (1)$$

(Da is the equivalent circle diameter of the opening of the well A, and Dab is the distance between the centroid of the opening of the well A and the centroid of the opening of the well B.)

In the well plate 101, the lower limit of Da/Dab is 0.8, and may be 0.83 or more. Furthermore, the upper limit of Da/Dab is less than 1, and may be 0.92 or less, or may be approximately 0.9. These lower and upper limits can be used in any combination.

When the plurality of microwells 110 are arranged in a triangular lattice and Formula (1) is satisfied, the distance between the centroid of the opening of a first microwell 110 and the centroid of the opening of a second microwell 110 closest to the first microwell 110 is uniform.

The microwells 110 shown in Fig. 6 are arranged in a triangular lattice. As shown in Fig. 6, a centroid Ca of the opening of the well A, a centroid Cb of the opening of the well B closest to the well A, a centroid Cc of the opening of a well C closest to both the well A and the well B form an equilateral triangle whose vertices are the centroids Ca, Cb, and Cc.

In Fig. 6, the line connecting the centroid Ca of the opening of the well A, the centroid Cb of the opening of the well B, and the centroid Cc of the opening of the well C forms an equilateral triangle.

In the well plate 101, the equivalent circle diameter of the openings of the microwells 110 is preferably 1 $\mu$m or more and 50 $\mu$m or less. That is, the lower limit of the equivalent circle diameter of the openings of the microwells 110 is preferably 1 $\mu$m.

Furthermore, the upper limit of the equivalent circle diameter of the openings of the microwells 110 may be less than 20 $\mu$m, 19 $\mu$m or less, 18 $\mu$m or less, 17 $\mu$m or less, 16 $\mu$m or less, 15 $\mu$m or less, 14 $\mu$m or less, 13 $\mu$m or less, 12 $\mu$m or less, 11 $\mu$m or less, or 10 $\mu$m or less.

The upper and lower limits of the equivalent circle diameter of the openings of the microwells 110 can be used in any combination.

(Cover member)

The cover member 102 has the same contour (i.e., narrow rectangular shape) as the well plate 101 in plan view. The cover member 102 is disposed to face the upper surface 101a of the well plate 101 with a gap between the upper surface 101a and the cover member 102.

The cover member 102 has two through holes passing through the cover member 102 in the thickness direction. The two through holes are provided on the respective end sides of the cover member 102 in the longitudinal direction. One of the through holes is an injection opening 121 used to inject a liquid into the internal space S of the fluidic device 100, and the other through hole is a discharge opening 122 used to discharge the liquid from the internal space S.

Other than a liquid sample, a detection reagent and a sealing liquid also correspond to the "liquid".

The injection opening 121, the internal space S, and the discharge opening 122 communicate with each other in this order, and as a whole, form a channel FC. In the fluidic device 100, a liquid is caused to appropriately flow in the channel FC to perform a detection reaction for a target substance. The plurality of microwells 110 are disposed between the injection opening 121 and the discharge opening 122 in plan view.

An injection port 125 that has a cylindrical shape and surrounds the injection opening 121 is provided on an upper surface 102a of the cover member 102. The injection port 125 communicates with the injection opening 121. For example, when a liquid is filled in the internal space using a syringe filled with the liquid, the injection port 125 is used to connect the syringe.

Similarly, a discharge port 126 that has a cylindrical shape and surrounds the discharge opening 122 is provided on the upper surface 102a of the cover member 102. The discharge port 126 communicates with the discharge opening 122. For example, when the liquid is extracted from the internal space S, the discharge port 126 is used to connect a tube through which the liquid flows.

The material of the cover member 102 may be any of the materials described as examples of the material of the well plate 101. The material of the cover member 102 may be the same as or different from the material of the well plate 101.

The material of the cover member 102 may or may not have electromagnetic wave transmission properties.

The material of the cover member 102 is preferably hydrophobic. Specifically, the material of the surface (i.e., lower surface 102b) of the cover member 102 facing the internal space S preferably has a contact angle of 5° or more and 80° or less with a sealing liquid SL. When the cover member 102 is made of such a material, the lower surface 102b has a contact angle of 5° or more and 80° or less with the sealing liquid SL. The lower surface 102b having a contact angle in the above range tends to allow a sample to be easily isolated in the microwells 110 when a sealing liquid is introduced into the internal space S by a method described later.

(Wall member)

The wall member 103 has a closed ring shape in plan view, and is provided along the outer edge of the upper surface 101a of the well plate 101. In Fig. 4, the wall surface of the wall member 103 facing the internal space S has a substantially rectangular shape in plan view, and the width of the wall surface is gradually reduced on the injection opening 121 side.

The wall member 103 is sandwiched between the well plate 101 and the cover member 102 and integrated with the well plate 101 and the cover member 102 to form the fluidic device 100. A space surrounded by the well plate 101, the cover member 102, and the wall member 103 is the internal space S in which a liquid sample is housed. The internal space S extends along the well plate 101 having a narrow rectangular shape in the longitudinal direction of the well plate 101.

The wall member 103 functions as a wall surface of the internal space S, and also functions as a spacer between the well plate 101 and the cover member 102. The height of the wall member 103, that is, the height of the internal space S, may be, for example, 100 μm or less.

The material of the wall member 103 is not specifically limited, and may be preferably, for example, a double-sided adhesive tape in which an acrylic adhesive is laminated on both surfaces of a core film. Examples of the material of the core film include silicone rubber and acrylic foam. The wall member 103 made of such a material enables the internal space S to be a liquid-tight space.

The material of the wall member 103 may be the same as the material of the well plate 101 described above. The wall member 103 made of such a material can be integrated with the well plate 101 and the cover member 102 by adhesion using an adhesive or welding such as thermal welding, ultrasonic welding, or laser welding.

The wall member 103 may be integrated with the well plate 101 and constitute part of the well plate 101. Similarly, the wall member 103 may be integrated with the cover member 102 and constitute part of the cover member 102.

The well plate 101 can be produced using known injection molding, microimprinting technique, or nanoimprinting technique. Alternatively, the well plate 101 can be produced using a known photolithography technique to form the microwells 110 by etching.

The cover member 102 and the wall member 103 can be produced by known injection molding.

[Detection reagent]

A detection reagent is reacted with a target substance and used to detect the target substance. Examples of the detection reagent include a buffer substance, an enzyme, a substrate, an antibody, and an antibody fragment.

For example, when the target substance is a nucleic acid, in order to perform a biochemical reaction such as an enzymatic reaction of a template nucleic acid associated with the target substance, an enzyme is selected according to the content of the biochemical reaction. The biochemical reaction of a template nucleic acid is, for example, a reaction in which signal amplification occurs under conditions in which a template nucleic acid is present.

The detection reagent is selected according to the detection reaction used. Specific examples of the detection reaction include an ICA method, a loop-mediated isothermal amplification (LAMP) method (registered trademark), a 5' to 3' nuclease method (TaqMan (registered trademark) method), and a fluorescent probe method.

Figs. 7 to 9 are each an explanatory diagram of a method of detecting a sample using the fluidic device 100.

First, a liquid sample and a detection reagent are mixed to prepare a mixed aqueous solution. The concentration of the detection reagent in the mixed aqueous solution is appropriately adjusted according to the types of detection reagent and detection reaction used.

The detection reagent may contain an adsorption inhibitor. Examples of the adsorption inhibitor include a surfactant and a protein.

In order to facilitate detection of a target substance, the sample may be pretreated prior to preparation of the mixed aqueous solution. Examples of the pretreatment include concentration adjustment (i.e., dilution or concentration), support by a carrier, and a binding reaction of two or more types of target substances.

Then, as shown in Fig. 7, a mixed aqueous solution L containing the detection reagent is injected from the injection opening 121 into the internal space S. When the mixed aqueous solution L flows in the internal space S (i.e., channel FC), the mixed aqueous solution L is also filled in the microwells 110 open to the internal space S.

After the internal space S and all the microwells 110 are filled with the mixed aqueous solution L, the mixed aqueous solution L passing through the channel FC is discharged from the discharge opening 122.

At this time, the concentration of the mixed aqueous solution L is preferably adjusted in advance so that a single target substance is filled in a single microwell 110. For example, when after a sample detection method (described later) is performed, the results show that quantification of the target substance is difficult due to high concentration of the mixed aqueous solution L, the results are used as preliminary experiment results, and the mixed aqueous solution L is diluted.

By performing the above operation, one or less target substance, that is, zero or one target substance, is filled in a single microwell 110. Thus, the number of microwells 110 in which a detection reaction (described later) is observed corresponds to the number of target substances, allowing target substance detection on a single-unit basis, that is, digital measurement. A target substance may not necessarily be introduced into all the microwells 110.

The means for introducing a target substance into the microwells 110 is not specifically limited, and an appropriate means can be selected according to the target substance to be detected. For example, target substances may be allowed to settle by their own weight in the fluidic device 100 (specifically, in the channel FC), and distributed to the microwells.

A substance (also referred to as a capture substance) that captures a target substance may be used and bound to a target substance which does not easily settle due to its own weight, to supply the target substance. Alternatively, a capture substance may be immobilized in the microwells in advance and used to capture a target substance supplied together with the mixed aqueous solution L to achieve higher efficiency of introducing the target substance into the microwells 110.

The reaction in which a capture substance and a target substance are bound together can be performed at any time point. For example, before preparation of the mixed aqueous solution, a target substance and a capture substance may be brought into contact with each other in a sample tube to perform the reaction.

Alternatively, after introduction of a capture substance into the microwells 110, a target substance may be introduced into the microwells 110 and brought into contact with the capture substance in the microwells 110.

A capture substance is a substance capable of capturing a target substance. The capture substance may be, for example, a bound body of a solid phase and a specific binding substance specifically binding to a target substance.

The solid phase constituting the capture substance may be particles, a film, a substrate, or the like. The capture substance may contain a single type or two or more types of specific binding substances to the target substance. The capture substance may contain, for example, three, four, five, or more types of specific binding substances.

The particles are not specifically limited, and may be polymer particles, magnetic particles, glass particles, or the like. In order to avoid nonspecific adsorption, the particles are preferably surface treated. Furthermore, in order to immobilize the specific binding substance, the particles preferably have a functional group such as a carboxyl group on the surface. More specifically, a product "Magnosphere LC300" manufactured by JSR Corporation or the like can be used.

For example, when a virus is used as a target substance, a cell to which the virus can attach (i.e., a cell having a virus receptor) may be used as a capture substance.

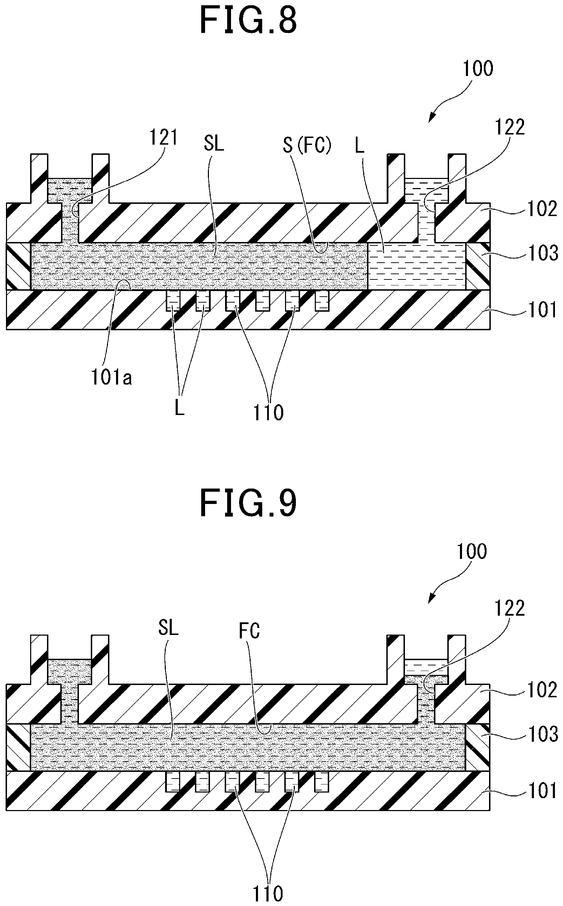

Then, as shown in Fig. 8, the sealing liquid SL is supplied from the injection opening 121 to the channel FC. The sealing liquid SL supplied to the channel FC flows in the surface direction of the upper surface 101a in the internal space S, and part of the mixed aqueous solution L supplied to the channel FC that is not housed in the microwells 110 is washed away and replaced with the sealing liquid SL.

Thus, the plurality of microwells 110 housing the mixed aqueous solution L containing a target substance are individually sealed with the sealing liquid SL to be independent reaction spaces. When the channel FC is filled with the sealing liquid SL, excess sealing liquid SL is discharged from the discharge opening 122. Fig. 9 shows a state in which all the plurality of microwells 110 are sealed with the sealing liquid SL, and all the mixed aqueous solution L in the channel FC is replaced with the sealing liquid SL.

Then, the fluidic device 100 is heated to cause the target substance and the detection reagent to react with each other. A target substance can be detected using any known detection method according to the characteristics of the target substance to be detected. A target substance can be detected by first performing a reaction (also referred to as a signal amplification reaction) in which a signal derived from the target substance is amplified to a detectable level, and then detecting the amplified signal using an appropriate means.

The signal amplification reaction performed in the detection device 1 may be an isothermal signal amplification reaction, and may be an ICA reaction, a loop-mediated isothermal amplification (LAMP) method (registered trademark), a 5' to 3' nuclease method (TaqMan (registered trademark) method), or a fluorescent probe method. In an ICA reaction, signal amplification proceeds in two reaction cycles: (1) complementary binding of nucleic acids and (2) recognition and cleavage of a triple-stranded structure by an enzyme. In such a signal amplification reaction, the influence of inhibition of the reaction cycle by impurities other than the target substance is small. Thus, even when various components (e.g., impurities) other than the target substance are present in the microwells 110, the target substance can be accurately detected using an ICA reaction.

The mixed aqueous solution L contains a reaction reagent and a template nucleic acid required for the ICA reaction. When a target substance is present in a well, by an enzymatic reaction due to an isothermal reaction, a fluorescent material is released from a quencher, and emits a predetermined fluorescence signal corresponding to excitation light.

In the ICA reaction, the reaction temperature of the target substance and the detection reagent is preferably 50°C or higher and 99°C or lower. The specific reaction temperature is preferably determined by performing a preliminary experiment according to the reagent used and the sensitivity of the results required. The reaction temperature is preferably optimized by performing an ICA reaction as a preliminary experiment after determination of the composition of the reagent, and using, for example, the results such as a signal, a noise, a signal-to-noise ratio (also referred to as an S/N ratio), and a signal-to-noise difference after a certain time.

The ICA reaction will be described in more detail below.

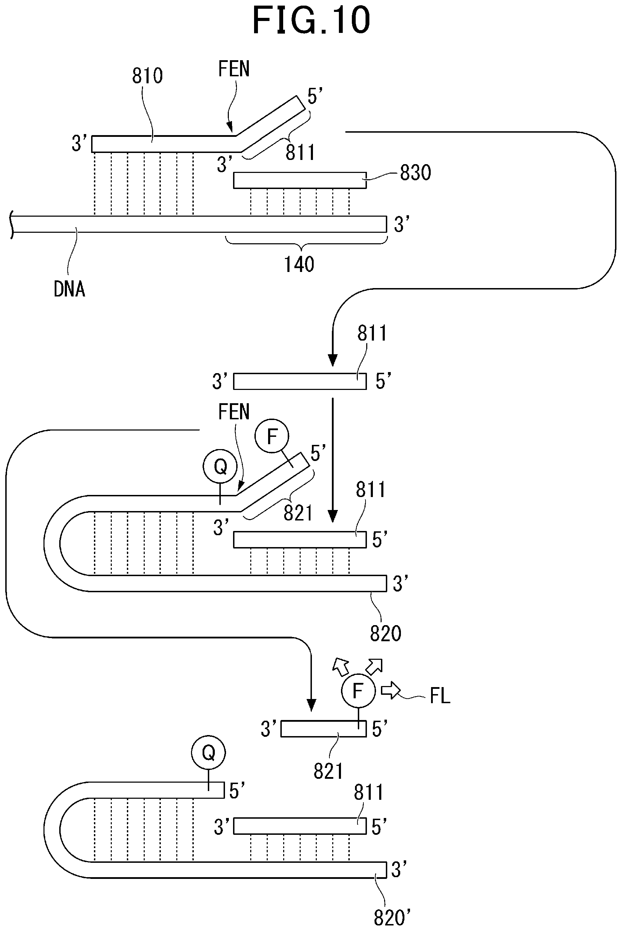

Fig. 10 is a schematic diagram showing an example of the ICA method. Fig. 10 shows a state in which DNA as a target substance is detected by the ICA method.

Examples of the reaction reagent required for the ICA reaction include ICA reaction reagents such as a flap probe 810, a flap endonuclease FEN, a fluorescent substrate 820, and an invasive probe (Invader oligo) 830.

The flap probe 810 and the invasive probe 830 are each a nucleic acid fragment (also referred to as oligonucleotide) designed to be hybridized with DNA as a target substance (also referred to as target DNA) to form a flap structure with a double-stranded nucleic acid 140.

The fluorescent substrate 820 is a nucleic acid fragment that has a hairpin structure and in which a fluorescent material F and a quencher Q are bound together. In the fluorescent substrate 820 shown in Fig. 10, the fluorescent material F is bound to the 5' end of the nucleic acid fragment, and the quencher Q is bound to a portion of the nucleic acid fragment shifted by a few bases from the 5' end toward the 3' end. The quencher Q prevents light emission from the fluorescent material F.

First, the flap probe 810 and the invasive probe 830 are hybridized with the target DNA. The flap probe 810 and the invasive probe 830 overlap by a single base at a SNP site of the target DNA to form an unstable tribasic structure. Thus, a first flap 811 is formed. The first flap 811 is a portion of the flap probe 810 that is not hybridized with the target DNA.

Then, FEN recognizes and reacts with the tribasic structure. Thus, the first flap 811 is cleaved to generate a nucleic acid fragment 811, and the nucleic acid fragment 811 is released in the mixed aqueous solution L.

The generated nucleic acid fragment 811 is hybridized with the fluorescent substrate 820. The nucleic acid fragment 811 enters the hairpin structure of the fluorescent substrate 820, and overlaps with the fluorescent substrate 820 by a single base at a SNP site to form an unstable tribasic structure. Thus, a second flap 821 is formed. The second flap 821 is a portion of the fluorescent substrate 820 that is not hybridized due to the entry of the nucleic acid fragment 811.

Then, FEN recognizes and reacts with the tribasic structure. Thus, the second flap 821 is cleaved to generate a nucleic acid fragment 821. In Fig. 10, the remaining portion of the fluorescent substrate 820 obtained by cleavage of the nucleic acid fragment 821 is denoted by reference sign 820'.

Thus, the fluorescent material F is separated from the quencher Q, and generates fluorescence FL. The target DNA can be detected by detecting the fluorescence FL.

A target substance can also be detected by binding, to the target substance, a substance (also referred to as a specific binding substance) specifically bound to the target substance, and detecting the specific binding substance bound to the target substance. For example, when the target substance is a protein, the target substance can be detected using ELISA. More specifically, the target substance may also be detected, for example, by sandwich ELISA using the principle of FRET.

When the sandwich method using the principle of FRET is performed, first, a first specific binding substance (e.g., antibody) and a second specific binding substance are prepared. The first specific binding substance is labeled with a first fluorescent material (also referred to as a donor), and the second specific binding substance is labeled with a second fluorescent material (also referred to as an acceptor) having a light absorption wavelength that overlaps with the fluorescence wavelength of the first fluorescent material.

Then, a target substance (e.g., antigen) is brought into contact with both the first specific binding substance and the second specific binding substance to form a composite. When the composite is formed, the donor and the acceptor are located closer to each other; thus, the fluorescence wavelength of the acceptor can be detected by irradiation with light having the excitation wavelength of the donor. Alternatively, a specific binding substance may be labeled with a nucleic acid fragment, and the nucleic acid fragment may be detected by an ICA reaction.

A specific binding substance similar to specific binding molecules for a structure (described later), for example, an antibody, an antibody fragment, an aptamer, or the like, can be used. In order to detect a specific binding substance bound to the target substance, the specific binding substance may be directly or indirectly labeled, for example, with an enzyme such as horseradish peroxidase (HRP). When two or more specific binding substances are used, specific binding molecules of each of the specific binding substances can be labeled in an identifiable manner.

A signal can be observed using a known appropriate method selected according to the type of signal to be observed. For example, when bright field observation is performed, a substrate provided with a well array is irradiated with white light in the vertical direction. When a fluorescence signal is observed, the well is irradiated with excitation light corresponding to a fluorescent material from the bottom side of the well, and fluorescence emitted from the fluorescent material is observed. An image of the entire or part of the well array observed is captured and stored, followed by image processing using a computer system. The irradiation directions for light (i.e., white light and excitation light) in bright field observation and fluorescence signal observation described above are examples, and can be modified accordingly as long as intended observation can be performed. For example, in the fluorescence signal observation, the substrate may be irradiated with excitation light in the vertical direction as with the irradiation direction with white light in bright field observation.

[Operation]

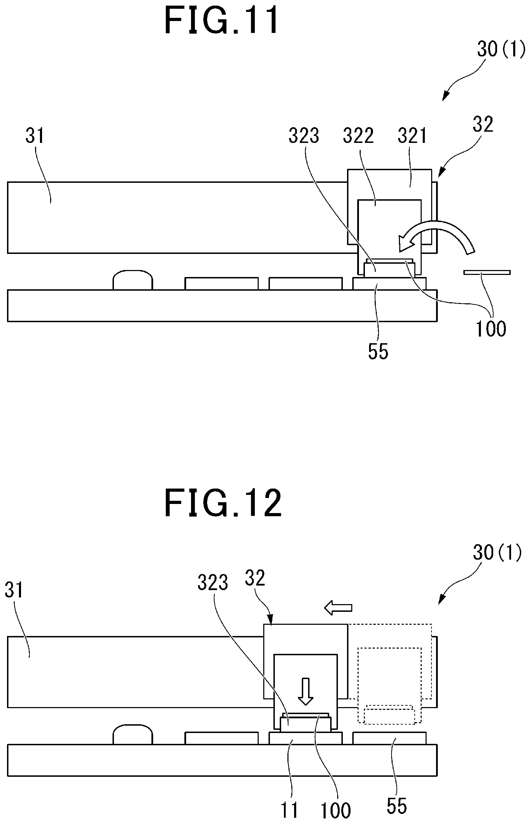

Figs. 11 to 14 are each an explanatory diagram showing operation of the detection device 1.

First, as shown in Fig. 11, a mixed aqueous solution of a liquid sample that contains a target substance and a detection reagent that reacts with the target substance to generate a product that emits fluorescence is housed in a fluidic device 100, and the fluidic device 100 is placed on the stage 323 of the conveying body 32. This operation is preferably performed in the standby unit 55 of the fluidic device 100.

In this case, the control unit 40 preferably performs heating in advance (also referred to as preheating) of the heating unit 11 to a temperature higher than room temperature and lower than or equal to a reaction temperature set in advance. As described above, in an ICA reaction, the reaction temperature of the target substance and the detection reagent is preferably, for example, 50°C or higher and 99°C or lower. Under the above temperature conditions, the preheating temperature is preferably higher than room temperature and, for example, 90°C or lower. "Room temperature" is, for example, 25°C.

Then, as shown in Fig. 12, the conveying unit 30 is driven to move the fluidic device 100 placed on the stage 323 to the heating unit 11. Thus, the fluidic device 100 is heated by the heating unit 11.

As described above, preheating of the heating unit 11 prior to heating of the fluidic device allows quick heating of the fluidic device 100, and thus is preferable. In the case where the heating unit 11 is preheated, when the conveying unit 30 starts conveying the fluidic device 100 from the standby unit 55 to the heating unit 11, the control unit 40 preferably changes the heating temperature of the heating unit 11 from the set preheating temperature to the reaction temperature for the ICA reaction. Alternatively, while the conveying unit 30 is conveying the fluidic device 100 from the standby unit 55 to the heating unit 11, the control unit 40 preferably changes the heating temperature of the heating unit 11 from the set preheating temperature to the reaction temperature for the ICA reaction.

In this case, the control unit 40 preferably performs cooling in advance (precooling) of the cooling unit 12 to a temperature higher than or equal to a cooling temperature set in advance and lower than the reaction temperature in the heating unit 11. For example, when the reaction temperature for the ICA reaction is 60°C, the precooling temperature is preferably, for example, 0°C or higher and lower than room temperature.

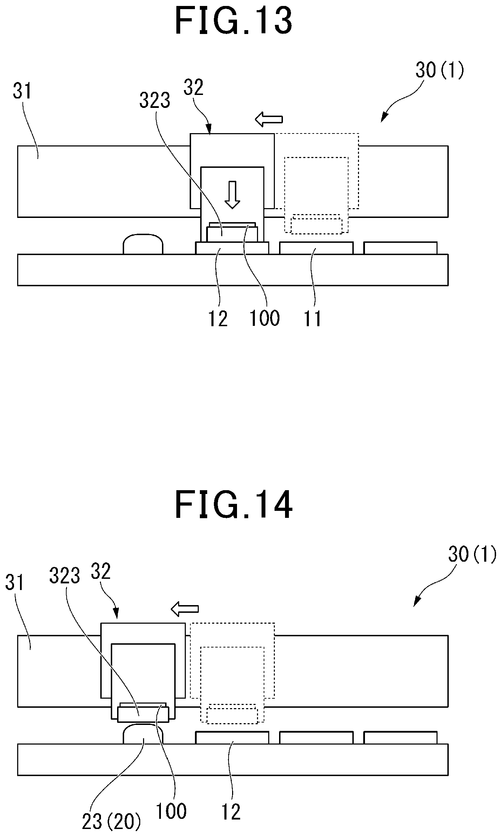

Then, as shown in Fig. 13, the conveying unit 30 is driven to move the fluidic device 100 placed on the stage 323 from the heating unit 11 to the cooling unit 12. Thus, the fluidic device 100 is cooled by the cooling unit 12.

As described above, precooling of the cooling unit 12 prior to cooling of the fluidic device allows quick cooling of the fluidic device 100, and thus is preferable. In the case where the cooling unit 12 is precooled, when the conveying unit 30 starts conveying the fluidic device 100 from the heating unit 11 to the cooling unit 12, the control unit 40 preferably changes the cooling temperature of the cooling unit 12 from the set precooling temperature to the actual cooling temperature. Alternatively, while the conveying unit 30 is conveying the fluidic device 100 from the heating unit 11 to the cooling unit 12, the control unit 40 preferably changes the cooling temperature of the cooling unit 12 from the set precooling temperature to the actual cooling temperature.

Then, as shown in Fig. 14, the conveying unit 30 is driven to move the fluidic device 100 placed on the stage 323 from the cooling unit 12 to a position above the projection lens 23 of the imaging unit 20. The imaging unit 20 irradiates the fluidic device 100 with excitation light, and captures an image of generated fluorescence.

Then, the captured image of the fluorescence is analyzed to measure the number of wells emitting fluorescence and quantify the target substance.

The detection device 1 described above provides the following effects.

When a detection reagent is continuously heated, a product that emits fluorescence is generated by a side reaction even if no target substance is present. In an image captured by the imaging unit 20, the product generated in this manner is indistinguishable from fluorescence derived from the target substance, and this may cause an error in detection of the target substance. Furthermore, in the fluidic device 100, the ICA reaction also proceeds during heating and cooling of the fluidic device 100. Thus, if time is required for heating and cooling of the fluidic device 100, the intensities of both the emission of signal light to be detected and the emission of noise light are assumed to be high, leading to low detection sensitivity.

On the other hand, in the detection device 1, after heating by the heating unit 11, the fluidic device 100 is cooled by the cooling unit 12 provided separately from the heating unit 11. Thus, the reaction of the target substance and the detection reagent accelerated by heating can be deactivated to prevent a side reaction. Therefore, the detection device 1 enables detection with high accuracy.

In a configuration in which the cooling unit is provided at the same position as the heating unit 11 so that both heating and cooling can be performed at the same position, when cooling is started after heating, together with the fluidic device 100, the heating unit 11 heated to the reaction temperature for a detection reaction such as an ICA reaction needs to be cooled. In such a configuration, the fluidic device 100 can be cooled, but additional time is required to cool the heating unit 11.

As described above, the fluidic device 100 is made of glass or resin. Furthermore, the fluidic device 100 stores liquids such as a liquid sample and a reagent. Furthermore, in order to increase the volume of the fluidic device 100, changes are assumed to be made, such as attachment of an additional member to the device or an increase in size of the device. All these factors lead to high specific heat of the fluidic device 100, interfering with quick cooling of the fluidic device 100.

On the other hand, in the detection device 1, the heating unit 11 and the cooling unit 12 are provided separately from each other; thus, after heating of the fluidic device 100, the fluidic device 100 can be quickly cooled as compared with the device configuration in which the cooling unit is provided at the same position as the heating unit 11. Furthermore, the detection device 1 in which the heating unit 11 and the cooling unit 12 are provided separately from each other allows preheating and precooling as described above. Thus, the detection device 1 enables detection in a short time, leading to higher work efficiency.

The detection device 1 having the above configuration provides a detection device enabling many detections based on the principle of digital ICA in a short time while ensuring high detection accuracy.

In the detection device 1 of the present embodiment, the member for cooling an object is provided at the position of the cooling unit 12; however, the present invention is not limited to this configuration. The cooling device may be configured such that cooling of the fluidic device 100 is completed before the fluidic device 100 heated by the heating unit 11 is conveyed to an imaging position of the imaging unit 20 and observation is started.

For example, the fluidic device 100 may be cooled by blowing air while the fluidic device 100 is conveyed from the heating unit 11 to the imaging position. In such a case, a means for blowing air in the conveying path from the heating unit 11 to the imaging position corresponds to the cooling unit.

The fluidic device 100 may be cooled at the imaging position. The fluidic device 100 may be cooled by a means having a known configuration. In such a case, the means for cooling the fluidic device 100 at the imaging position corresponds to the cooling unit. In such a configuration, observation (image capturing) may be performed while the fluidic device 100 is cooled, or may be performed after the fluidic device 100 is cooled.

In the present embodiment, when the projection lens 23 (also serving as an objective lens) has an autofocus mechanism, prior to image capturing, the control unit 40 may control the autofocus mechanism to set the focus position of the objective lens to a microwell 110. The control performed by the control unit 40 allows the detection device 1 to accurately capture an image, achieving detection with high accuracy. Furthermore, by using a microwell 110 as an alignment mark and setting in advance the focus position to the microwell 110, even when warpage or distortion of the entire fluidic device 100 occurs, the focus position can be quickly readjusted.

When the imaging unit 20 has no autofocus mechanism, the focus position of the objective lens may be set to a microwell 110 in a different manner. For example, an alignment mark may be provided in the fluidic device 100, and in the detection device 1, after the focus is set to a microwell 110 using the alignment mark, an image of another microwell 110 may be captured. The alignment mark is preferably provided at the same focus position as that of the microwell 110.

Even when the focus position of an alignment mark is different from the focus position of a microwell 110 in the z-axis direction, the offset between the focus positions may be measured and corrected to set the focus position to the microwell 110 and capture an image of the microwell 110.

For example, when warpage or distortion occurs in the entire fluidic device 100, the focal length may be different for each microwell 110. In such a case, the amount of warpage of the fluidic device 100 may be approximated by measuring, for example, the focal length between one of a plurality of microwells 110 (i.e., well array) that is located around the array and another one of the plurality of microwells 110 that is located in a center portion of the array, and using the correspondence between the obtained focal length and the positions of the microwells 110 for which the focal length has been measured. The obtained amount of warpage is preferably used as a correction value of the offset to set the focus position to the microwell 110 and capture an image of the microwell 110.

In the above method, the amount of warpage of the fluidic device 100 is approximated from the focal length of the microwells 110; however, an alignment mark of the fluidic device 100 may be used as a measurement object for obtaining the amount of warpage.

In such a case, as described above, some (e.g., one to four) of the plurality of wells may be used as alignment marks provided in the fluidic device 100, or an alignment mark may be separately provided around the region in which the microwells 110 are provided.

Furthermore, an image of the fluidic device 100 may be captured at a plurality of focus positions, and the obtained plurality of images may be used to composite a known z-stack image to obtain a composite image in focus over the entire image.

[Second embodiment]

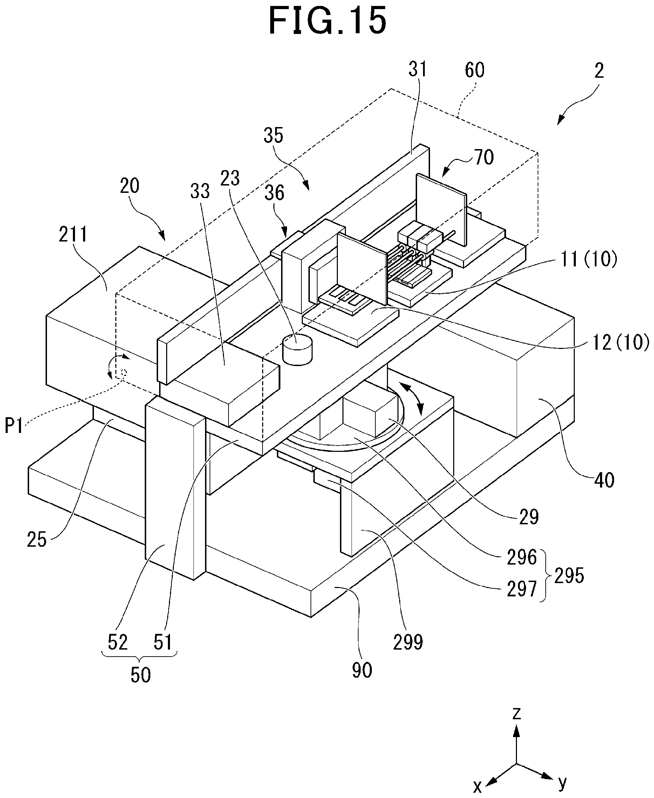

Figs. 15 to 19 are each an explanatory diagram of a detection device according to the second embodiment of the present invention. In the present embodiment, the same components as in the first embodiment are denoted by the same reference signs, and detailed description is omitted.

Fig. 15 is a schematic perspective view of a detection device 2 of the present embodiment, and corresponds to Fig. 1 of the first embodiment. The detection device 2 includes the temperature adjustment unit 10, the imaging unit 20, a conveying unit 35, and the control unit 40. Furthermore, the detection device 2 includes a cover 60 and a moving means 70.

The cover 60 is a box-shaped member that covers the entire components disposed on the stage 51. The cover 60 can be opened and closed by being rotated around a rotation axis that is set to pass through a point P1 and be parallel to the x-axis.

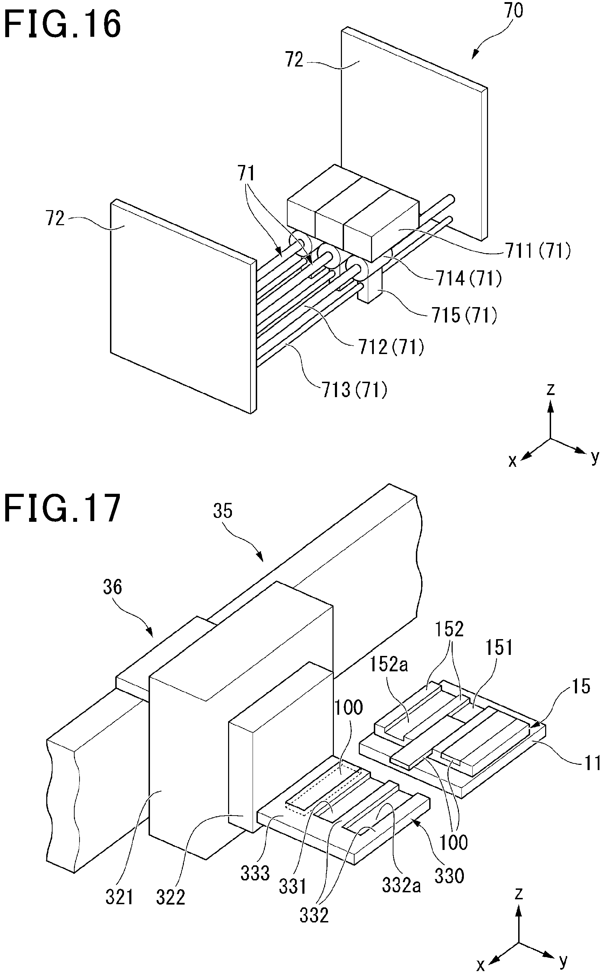

Fig. 16 is a schematic perspective view of the moving means 70. The moving means 70 is provided on the inner upper surface of the cover 60 (see Fig. 15). The moving means 70 includes a plurality of (three in Fig. 16) extrusion units 71 that are arranged in the y direction, and a pair of attaching portions 72 that support the extrusion units 71 on both sides of the moving means 70 in the x direction. In Fig. 16, the attaching portions 72 are plate-shaped members that collectively support the plurality of extrusion units 71, but are not specifically limited.

The extrusion units 71 each include a motor 711, a feed screw 712, a guide shaft 713, a nut 714, and a hook 715.

The motor 711 rotates the feed screw 712 via a deceleration gear (not shown).

The feed screw 712 extends in the x direction. Both ends of the feed screw 712 in the x direction are rotatably supported by the attaching portions 72. The motor 711 is driven to rotate the feed screw 712 around the center axis of the feed screw 712.

The guide shaft 713 extends in the x direction at a position in the -z direction with respect to the feed screw 712. The guide shaft 713 is inserted through a through hole (not shown) of the hook 715, and both ends of the guide shaft 713 in the x direction are fixed to the attaching portions 72.

The feed screw 712 is inserted into the nut 714. The hook 715 is coupled to the lower side (-z side) of the nut 714. The shape of the hook 715 is not specifically limited, as long as the hook 715 has an extrusion function (described later).

In the moving means 70, when the motor 711 is rotated to rotate the feed screw 712, the nut 714 and the hook 715 are moved in the ±x direction along the guide shaft 713.

Fig. 17 is a schematic perspective view of the heating unit 11 and the conveying unit 35. The heating unit 11 includes a temperature control holder 15. The temperature control holder 15 may be integrated with the upper surface of the heating unit 11, or may be a member separate from the heating unit 11 and be fixed to the upper surface of the heating unit 11.

The temperature control holder 15 includes a base portion 151 that has a rectangular shape in plan view, and a plurality of (four in Fig. 17) rails 152 that extend in the x direction on the upper surface of the base portion 151. The interval between adjacent rails 152 is equivalent to the width of a fluidic device 100 in the transverse direction, and a groove (also referred to as a first housing portion) 152a into which a fluidic device 100 is inserted is provided between the rails 152. The grooves 152a extend in the conveying direction of a conveying body 36, that is, the x direction.

When the temperature control holder 15 is a member separate from the heating unit 11, at least the base portion 151 is preferably made of a metal material having high thermal conductivity, such as aluminum or copper.

The conveying unit 35 includes the conveying body 36. The conveying body 36 includes the first member 321, the second member 322, and a measuring holder 330.

The measuring holder 330 includes a base portion 331 that has a rectangular shape in plan view, a plurality of (four in Fig. 17) rails 332 that extend in the x direction on the upper surface of the base portion 331, and a wall portion 333 that is provided at the end portions of the rails 332 on the +x side.

As with the stage 323 described above, the base portion 331 may have various configurations as long as a fluidic device 100 can be placed on the stage 323 and the fluidic device 100 can be observed from below (i.e., -z direction). The stage 323 may be, for example, a plate-shaped member that allows light to be transmitted, or a frame with a void in which a fluidic device 100 is observed.

The height position in the z direction of the upper surface of the base portion 331 of the measuring holder 330 is substantially the same as the height position in the z direction of the upper surface of the base portion 151 of the temperature control holder 15.

The interval between adjacent rails 332 is equivalent to the width of a fluidic device 100 in the transverse direction, and a groove (second housing portion) 332a into which a fluidic device 100 is inserted is provided between the rails 332. The grooves 332a extend in the conveying direction of the conveying body 36, that is, the x direction. The +x side of the grooves 332a is closed by the wall portion 333.

In Fig. 17, the number of grooves 152a of the temperature control holder 15 and the number of grooves 332a of the measuring holder 330 are the same, but may be different. The grooves 152a and the grooves 332a are both arranged in the x direction.

Furthermore, the number of grooves 152a of the temperature control holder 15 and the number of extrusion units 71 of the moving means 70 shown in Fig. 16 are, for example, the same, but may be different.

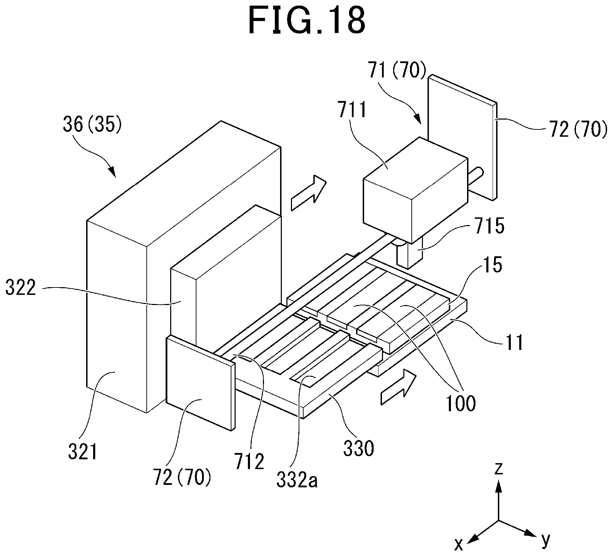

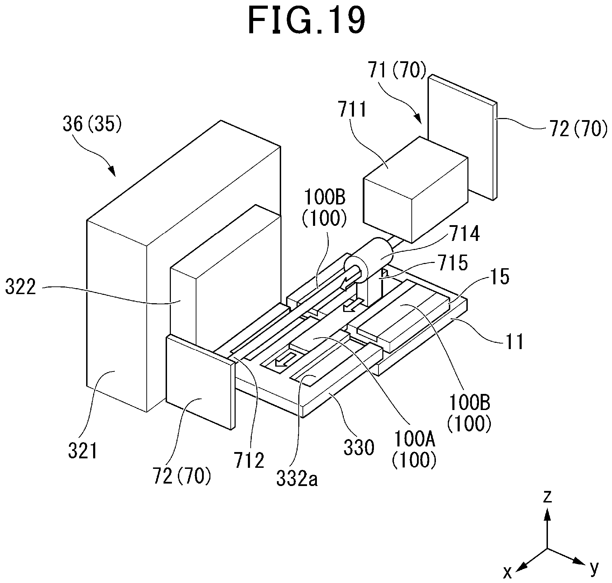

Figs. 18 and 19 are each an explanatory diagram showing operation of the detection device 2. In Figs. 18 and 19, the guide shafts of the extrusion units 71 are not shown for easy understanding of the drawings. The detection device 2 enables heating, cooling, and observation of a plurality of fluidic devices 100 to be performed at different times.

First, as shown in Fig. 18, fluidic devices 100 are placed in the grooves 152a of the temperature control holder 15 (see Fig. 17), and the fluidic devices 100 together with the temperature control holder 15 are heated by the heating unit 11.

The conveying body 36 is moved in the -x direction to bring the end portion of the measuring holder 330 on the -x side closer to the end portion of the temperature control holder 15 on the +x side.

When the cover 60 shown in Fig. 15 is closed, the lower end of the hook 715 of the extrusion units 71 is located closer to the -z side than the upper surfaces of the fluidic devices 100 are.

Then, as shown in Fig. 19, the motor 711 of one of the extrusion units 71 is driven to move the nut 714 and the hook 715 in the +x direction. When the hook 715 is moved in the +x direction, the hook 715 is brought into contact with a fluidic device 100A, and due to the movement of the hook 715, the fluidic device 100A is extruded in the +x direction and moved to the measuring holder 330. The fluidic device 100 moved to the measuring holder 330 is housed in one of the grooves 332a. The remaining fluidic device 100B is left in the temperature control holder 15.

The conveying unit 35 moves the conveying body 36 in the +x direction. In the detection device 2, the cooling unit 12 (see Fig. 15) appropriately cools the fluidic device 100A, and the imaging unit 20 performs image capturing and detection.

Then, in the detection device 2, the remaining fluidic device 100B is subjected to the same operation as the fluidic device 100A, and the imaging unit 20 (see Fig. 15) performs image capturing and detection.

Such a process performed to the fluidic devices 100 allows a detection process in which the fluidic device 100A and the fluidic device 100B are heated for different heating times.

The detection device 2 having the above configuration also provides a detection device enabling many detections based on the principle of digital ICA in a short time while ensuring high detection accuracy.

Preferred embodiments according to the present invention have been described with reference to the accompanying drawings; however, the present invention is not limited to the embodiments. The shapes, combinations, and the like of the components described in the above embodiments are examples, and various modifications can be made based on design, specifications, and the like without departing from the spirit of the present invention.

[Industrial Applicability]

The present invention provides a detection device enabling a large number of detections based on the principle of digital ICA in a short time while ensuring high detection accuracy.

[Reference Signs List]

    1, 2 ... Detection device
    10 ... Temperature adjustment unit
    11 ... Heating unit
    12 ... Cooling unit
    15 ... Temperature control holder
    20 ... Imaging unit
    21 ... Light source unit
    22 ... Dichroic mirror
    23 ... Projection lens
    24 ... Image forming lens
    25 ... Imaging means
    27 ... Spatial filter
    30, 35 ... Conveying unit
    40 ... Control unit
    70 ... Moving means
    100, 100A, 100B ... Fluidic device
    110 ... Well (microwell)
    152a ... Groove (first housing portion)
    211 ... Light source
    212 ... Optical filter
    212a ... First optical filter
    212b ... Second optical filter
    215 ... External light introduction unit
    295 ... Switching unit
    327a ... Groove (second housing portion)
    A, B, C ... Well
    DNA ... Target
    EL ... Excitation light
    FL ... Fluorescence
    FP ... Confocus
    L ... Mixed aqueous solution
    L1 ... Light
    L2 ... External light
    P ... Pinhole

**Claims**

**1.** A detection device comprising:

    a temperature adjustment unit that adjusts a temperature of a fluidic device;

an imaging unit that irradiates the fluidic device with excitation light and captures an image of fluorescence emitted from the fluidic device; and a conveying unit that conveys the fluidic device to the temperature adjustment unit and the imaging unit, wherein the fluidic device houses a mixed aqueous solution of a liquid sample that contains a target substance and a detection reagent that reacts with the target substance to generate a product that emits the fluorescence, and the temperature adjustment unit includes a heating unit that heats the fluidic device and a cooling unit that cools the fluidic device heated.

2. The detection device according to claim 1, comprising

a control unit that controls operation of the temperature adjustment unit, wherein the control unit controls the temperature of the heating unit to be 50°C or higher and 99°C or lower.

3. The detection device according to claim 2, wherein prior to heating of the fluidic device, the control unit performs preheating in which the heating unit is heated to a temperature higher than room temperature and lower than or equal to a reaction temperature set in advance.

4. The detection device according to any one of claims 1 to 3, comprising

a control unit that controls operation of the temperature adjustment unit, wherein the control unit controls the temperature of the cooling unit to be 0.1°C or higher and lower than 30°C.

5. The detection device according to claim 4, wherein prior to cooling of the fluidic device, the control unit performs precooling in which the cooling unit is cooled to a temperature higher than or equal to a cooling temperature set in advance and lower than room temperature.

6. The detection device according to claim 1, wherein

the imaging unit includes

a light source unit that emits the excitation light,
a dichroic mirror that reflects the excitation light and transmits the fluorescence,
a projection lens that projects the excitation light reflected from the dichroic mirror onto the fluidic device,

an image forming lens that forms an image of the fluorescence transmitted through the dichroic mirror, and
an imaging means that captures the image formed by the image forming lens, and

the projection lens also serves as an objective lens that collects the fluorescence generated by the fluidic device and guides the fluorescence to the image forming lens.

7. The detection device according to claim 6, wherein the light source unit includes

a light source that emits light including the excitation light, and
an optical filter that transmits part of the light having a wavelength that is used as the excitation light.

8. The detection device according to claim 7, wherein the light source unit includes

a first optical filter that transmits part of the light having a first wavelength that is used as the excitation light,
a second optical filter that transmits part of the light having a second wavelength that is used as the excitation light, and
a switching unit that performs switching between the first optical filter and the second optical filter.

9. The detection device according to claim 6, wherein the light source unit includes an external light introduction unit that introduces external light and guides the external light to the fluidic device.

10. The detection device according to claim 6, wherein the projection lens and the objective lens form a confocal optical system.

11. The detection device according to claim 10, wherein

the imaging unit includes a spatial filter that has a pinhole and is provided between the image forming lens and the imaging means,
a confocal position of the confocal optical system is located between the image forming lens and the imaging means, and
the pinhole spatially overlaps with the confocal position.

12. The detection device according to claim 6, comprising

a control unit, wherein
the fluidic device has a microwell that houses the target substance and the detection reagent and is used as a reaction site in which the product is generated,
the objective lens has an autofocus mechanism, and
prior to image capturing by the imaging means, the control unit controls the autofocus mechanism to set a focus position of the objective lens to the microwell.

**13.** The detection device according to claim 1, further comprising

a moving means, wherein
the heating unit includes a temperature control holder that houses a plurality of the fluidic devices,
the conveying unit includes a conveying holder that houses the plurality of fluidic devices,
the temperature control holder includes a first housing portion that extends in a conveying direction of the conveyng unit and houses the plurality of fluidic devices,
the temperature control holder includes a second housing portion that extends in the conveying direction of the conveying unit and houses the plurality of fluidic devices, and
the moving means extrudes and moves fluidic devices housed in the first housing portion toward the second housing portion while the temperature control holder and the conveying holder are close to each other.

# FIG.1

# FIG.2

# FIG.3

# FIG.4

# FIG.5

# FIG.6

# FIG.7

# FIG.8

# FIG.9

# FIG.10

# FIG.11

30(1)

323  322  321    32

31

100

55

# FIG.12

30(1)

323  32

31

11  100  55

# FIG.13

# FIG.14

# FIG.15

# FIG.16

# FIG.17

# FIG.18

# FIG.19

## INTERNATIONAL SEARCH REPORT

| International application No. |
|---|
| **PCT/JP2023/023317** |

**A. CLASSIFICATION OF SUBJECT MATTER**

***G01N 35/00***(2006.01)i; ***C12M 1/00***(2006.01)i; ***C12Q 1/68***(2018.01)i; ***G01N 21/03***(2006.01)i; ***G01N 21/64***(2006.01)i; ***G01N 35/04***(2006.01)i; ***G01N 37/00***(2006.01)i

FI: G01N35/00 B; G01N21/03 Z; G01N21/64 F; G01N37/00 101; G01N37/00 103; G01N35/04 G; C12M1/00 A; C12Q1/68

According to International Patent Classification (IPC) or to both national classification and IPC

**B. FIELDS SEARCHED**

Minimum documentation searched (classification system followed by classification symbols)

G01N35/00-37/00; G01N21/03; G01N21/64; C12M1/00; C12Q1/68

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-521960 A (NORTHWESTERN UNIVERSITY) 27 July 2020 (2020-07-27) paragraphs [0040]-[0042], [0058], [0063], [0077], [0081], [0107], fig. 1A-5C | 1-5 |
| Y | paragraphs [0040]-[0042], [0058], [0063], [0077], [0081], [0107], fig. 1A-5C | 6-12 |
| Y | WO 2007/074929 A1 (OLYMPUS CORP.) 05 July 2007 (2007-07-05) p. 10, lines 27-34, p. 15, lines 2-41, fig. 5 | 6-12 |
| Y | JP 2002-148265 A (FUJI PHOTO FILM CO., LTD.) 22 May 2002 (2002-05-22) paragraphs [0100]-[0104], fig. 1, 4 | 10-11 |
| Y | JP 2013-122395 A (ASAHI GLASS CO., LTD.) 20 June 2013 (2013-06-20) paragraph [0068] | 12 |
| A | JP 2021-081359 A (HITACHI HIGH-TECH CORP.) 27 May 2021 (2021-05-27) | 1-13 |
| A | JP 2017-070308 A (SONY CORP.) 13 April 2017 (2017-04-13) | 1-13 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 July 2023** | **15 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

<div style="text-align: center;">

**INTERNATIONAL SEARCH REPORT**
**Information on patent family members**

</div>

International application No.

**PCT/JP2023/023317**

| Patent document cited in search report | | | Publication date (day/month/year) | Patent family member(s) | | | Publication date (day/month/year) |
|---|---|---|---|---|---|---|---|
| JP | 2020-521960 | A | 27 July 2020 | US 2020/0171503 A1 paragraphs [0016]-[0018], [0080], [0085], [0099], [0103], [0128], fig. 1A-5C WO 2018/218053 A1 AU 2018271981 A CA 3064762 A1 | | | |
| WO | 2007/074929 | A1 | 05 July 2007 | US 2010/0219353 A1 paragraphs [0043], [0067]-[0072], fig. 5 EP 1967886 A1 CN 101351735 A | | | |
| JP | 2002-148265 | A | 22 May 2002 | US 2002/0028521 A1 paragraphs [0107]-[0111], fig. 1, 4 EP 1186886 A2 | | | |
| JP | 2013-122395 | A | 20 June 2013 | (Family: none) | | | |
| JP | 2021-081359 | A | 27 May 2021 | (Family: none) | | | |
| JP | 2017-070308 | A | 13 April 2017 | (Family: none) | | | |

Form PCT/ISA/210 (patent family annex) (January 2015)

**REFERENCES CITED IN THE DESCRIPTION**

**Patent documents cited in the description**

- JP 2022106963 A

- WO 2015115635 A